# EUROPÄISCHE PATENTSCHRIFT

(11) **EP 3 300 037 B1**
(45) Veröffentlichungstag und Bekanntmachung des Hinweises auf die Patenterteilung: **17.05.2023**
(21) Anmeldenummer: 17192385.7
(22) Anmeldetag: 21.09.2017
(51) Int. Cl.: G07C 9/20, G07C 9/00, G07C 9/27, G07C 9/30, H04L 9/32

(54) **ZUGANGSVERWALTUNGSEINRICHTUNG, VORRICHTUNG ZUR AUSWERTUNG VON ZUGANGSINFORMATIONEN UND VERFAHREN ZUR ZUGANGSVERWALTUNG**
ACCESS MANAGEMENT DEVICE, DEVICE FOR EVALUATING ACCESS INFORMATION AND METHOD FOR ACCESS MANAGEMENT
DISPOSITIF DE GESTION D'ACCÈS, DISPOSITIF D'ÉVALUATION DES INFORMATIONS D'ACCÈS ET PROCÉDÉ DE GESTION D'ACCÈS

(30) Priorität: 23.09.2016 DE 102016117981
(43) Veröffentlichungstag der Anmeldung: 28.03.2018
(73) Patentinhaber: Astra Gesellschaft Für Asset Management MbH&Co. Kg, 30890 Barsinghausen (DE)
(72) Erfinder: Stobbe, Anatoli, 30890 Barsinghausen (DE)
(74) Vertreter: Patentanwälte Thömen & Körner

(56) Entgegenhaltungen:
- EP-A1- 1 650 716
- EP-A1- 2 595 341
- EP-A2- 1 646 937
- DE-A1-102014 105 243
- US-A1- 2015 254 915

## Beschreibung

Die Erfindung betrifft eine Zugangsverwaltungseinrichtung nach dem Oberbegriff des Anspruchs 1 und ein Verfahren zur Zugangsverwaltung nach dem Oberbegriff des Anspruchs 2.

Zugangskontrollsysteme verfügen meist über einen eigenen Speicher oder eine Verbindung zu einem externen Speicher, in dem Zugangsdaten für Berechtigte abgelegt sind. Bei einem Zugangswunsch können dann die von einer zugangsbegehrenden Person übergebenen Daten mit den gespeicherten Daten verglichen werden und nach dem Vergleichsergebnis der Zugang gewährt oder abgelehnt werden. Bei Änderungen oder Wegfall der Berechtigungen müssen auch die gespeicherten Daten geändert oder gelöscht werden.

Bei entlegenen Zugangsstellen kann dieses System hinderlich sein, da eine Änderung vor Ort aufwendig ist oder eine Anbindung an einen externen Speicher wegen fehlender Übertragungswege nicht möglich ist. Auch eine einmalige, mehrmalige oder dauerhafte zeitliche Beschränkung der Berechtigung zur Vermeidung von missbräuchlichen Zugangsbegehren wird aus den gleichen Gründen erschwert.

Aus der EP2 595 341 A1 ist ein Verfahren zur Verwaltung von temporären Benutzerrechten z.B. für Gebäude bekannt, bei dem durch eine Benutzerrechteverwaltung ein erstes Prüfmerkmal erzeugt wird, indem eine bei der Benutzerrechteverwaltung hinterlegte Kennung und ein Gültigkeitszeitraum mittels eines ersten Algorithmus transformiert werden. Durch die Benutzerrechteverwaltung wird ein Zugangscode erzeugt, indem dem ersten Prüfmerkmal eine Zeiteinschränkung hinzugefügt wird, der Zugangscode von der Benutzerrechteverwaltung an einen Benutzer übermittelt wird, der Zugangscode vom Benutzer an eine am Ort des Objekts lokalisierte Kontrolleinrichtung übermittelt wird; durch die Kontrolleinrichtung ein zweites Prüfmerkmal erzeugt wird, indem eine bei der Kontrolleinrichtung hinterlegte Kennung und ein aktueller Zeitraum vergleicht, welcher durch ein der Kontrolleinrichtung zugeordnetes Zeitmessinstrument ermittelt wurde, mittels des ersten Algorithmus transformiert werden. Die Kontrolleinrichtung isoliert das erste Prüfmerkmal aus dem Zugangscode und vergleicht es dann mit dem zweiten Prüfmerkmal. Weiter isoliert die Kontrolleinrichtung die Zeiteinschränkung aus dem Zugangscode und vergleicht sie dann mit einer Zeitinformation, welche durch ein der Kontrolleinrichtung zugeordnetes Zeitmessinstrument ermittelt wurde. Abhängig vom Vergleichsergebnis wird der Zugang zum Objekt freigegeben.

Die DE 10 2014 105 243 A1 offenbart ein Verfahren zur Zugangskontrolle, durchgeführt durch eine Zugangskontrollvorrichtung 4. Das Verfahren umfasst ein Erhalten von an die Zugangskontrollvorrichtung 4 kommunizierter Zugangsberechtigungsinformation, die zumindest ein oder mehrere Zugangsberechtigungsparameter und erste Prüfinformation umfasst; ein erstes Prüfen, unter Verwendung zumindest der kommunizierten Zugangsberechtigungsparameter, der kommunizierten ersten Prüfinformation und eines in der Zugangskontrollvorrichtung gespeicherten zweiten Schlüssels eines symmetrischen oder asymmetrischen Schlüsselpaars, ob die kommunizierte erste Prüfinformation durch Durchführung von kryptographischen Operationen über den kommunizierten Zugangsberechtigungsparametern entsprechende Zugangsberechtigungsparameter unter Verwendung zumindest eines ersten Schlüssels des Schlüsselpaars erzeugt wurde, und ein Entscheiden, ob Zugang gewährt werden darf, wobei notwendige Bedingungen zur Gewährung des Zugang sind, dass das erste Prüfen ein positives Ergebnis liefert und festgestellt wird, dass zumindest eine vordefinierte Menge der kommunizierten Zugangsberechtigungsparameter hinsichtlich zumindest im Zeitpunkt des ersten Prüfens in der Zugangskontrollvorrichtung vorhandener jeweiliger Bezugsinformationen jeweils zum Zugang berechtigen. Weiterhin offenbart werden korrespondierende Verfahren an einer Zugangsberechtigungserzeugungsvorrichtung und einer Zugangsberechtigungsnachweisvorrichtung, den Verfahren zugeordnete Computerprogramme und ein System, das diese Vorrichtungen umfasst.

Aus der US 2015/254915 A1 ist das Verwalten des Zugriffs durch einen Benutzer bekannt, welches das Anfordern eines Zugriffscodes von einem externen Server umfasst, wobei der externe Server den Zugriffscode nur dann dem Benutzer zur Verfügung stellt, wenn der Benutzer für den Zugang autorisiert ist, der Zugangscode einer Eingabeeinheit zur Verfügung gestellt wird und dem Benutzer der Zugang durch eine Sicherheitskomponente gewährt wird, wenn der Zugangscode gültig ist. Die Eingabeeinheit kann ein Keypad sein. Der Zugriffscode kann über RF-Kommunikation, wie NFC, Bluetooth, und/oder Bluetooth Smart, bereitgestellt werden, Das Gerät kann den Zugriffscode von dem externen Server anfordern. Bei dem Gerät kann es sich um ein mobiles Gerät handeln. Das Verwalten des Zugriffs durch einen Benutzer kann auch beinhalten, dass der Benutzer zusätzlich zum Zugriffscode eine PIN eingibt. Die PIN kann vom Gerät des Benutzers eingegeben werden. Der Zugang kann zu einem physischen Bereich sein, und dem Benutzer kann der Zugang gewährt werden, indem eine Tür geöffnet wird.

Der Erfindung liegt die Aufgabe zugrunde, eine Zugangsverwaltungseinrichtung und ein Verfahren zur Zugangsverwaltung dahingehend zu verbessern, dass unabhängig von aktuell gespeicherten oder verfügbaren Berechtigungen eine zuverlässige, individuelle und eigenständige Auswertung von Zugangsinformationen ermöglicht wird.

Diese Aufgabe wird bei einer Zugangsverwaltungseinrichtung nach dem Oberbegriff des Anspruchs 1 durch die Merkmale dieses Anspruchs und bei einem Verfahren nach dem Oberbegriff des Anspruchs 2 durch die Merkmale jenes Anspruchs gelöst.

Weiterbildungen und vorteilhafte Ausgestaltungen ergeben sich aus Unteransprüchen.

Die erfindungsgemäße Zugangsverwaltungseinrichtung ermöglicht es, über eine Verwaltungszentrale berechtigten Personen Informationen bereitzustellen, um Zugang zu entfernten Objekten zu erhalten, bei denen diese Personen Tätigkeiten, z. B. Wartungsarbeiten, ausüben müssen. Nicht berechtigten Personen hingegen soll der Zugang verwehrt bleiben. Die Verwaltungszentrale, die sämtliche Identnummern zugangsberechtigter Personen, deren Rechte sowie Zusatzinformationen zu einer Gruppen- oder Flottenzugehörigkeit der Personen gespeichert hat, erzeugt zu diesem Zweck Zugangsinformationen und Prüfinformationen.

Die Zugangsinformationen bestehen aus einem festen Teil, der eine Identnummer der Person sowie Rechte beinhalten kann, die diese Person ausüben darf. Die Rechte können nach Hierarchie und Aufgabenbereich unterschiedlich sein, z. B. ob und welche weiteren Zugänge des Objekts zu Räumen oder Gegenständen gestattet sind. Außerdem bestehen die Zugangsinformationen aus einem variablen Teil, der Angaben zur zeitlichen Gültigkeit und zum ein- oder mehrmaligen Zutritt enthalten kann. Diese Zugangsinformationen, die beim späteren Zugangswunsch auch zu Steuerungszwecken eingesetzt werden können, werden berechtigten Personen übermittelt und lassen sich auf einem Zwischenspeichermedium speichern. Die Zusatzinformationen werden hingegen nicht übermittelt und gespeichert.

Zusätzlich zur Erzeugung der Zugangsinformationen erzeugt die Verwaltungszentrale eine Prüfinformation. Hierzu werden die Zugangsinformationen mit den Zusatzinformationen verknüpft und anschließend gemeinsam einem Verschlüsselungsalgorithmus mit einem geheimen Schlüssel unterzogen. Das Ergebnis ist ein Kryptogramm oder eine durch weitere Anwendung von Algorithmen erzeugte Prüfsumme, die die Prüfinformation darstellt. Diese Prüfinformation wird ebenfalls der berechtigten Person übermittelt und kann auf demselben oder einem weiteren Zwischenspeichermedium gespeichert werden.

Mit diesen Informationen kann die Person Zugang zu dem Objekt erhalten, indem sie die Zugangsinformationen und die Prüfinformation einer Vorrichtung zur Auswertung von Zugangsinformationen übergibt. Ein Rechner der Vorrichtung ermittelt aus den gelesenen Zugangsinformationen und internen gespeicherten Varianten der Zusatzinformation mit demselben Verschlüsselungsalgorithmus und demselben Schlüssel eine Variante einer Vergleichsinformation und vergleicht die Vergleichsinformation dann mit der ebenfalls vom Zwischenspeichermedium gelesenen oder eingegebenen Prüfinformation. Bei Nichtübereinstimmung von Vergleichsinformation und Prüfinformation wird der Vorgang mit anderen Varianten der Zusatzinformation wiederholt, bis entweder eine Übereinstimmung ermittelt wurde und dann nach einem weiteren Vergleich der Gültigkeit mit der von einer internen Uhr gelieferten aktuellen Zeit die Entriegelung einer Zugangstür freigegeben wird oder bei keiner Übereinstimmung der Zugang verwehrt bleibt.

Bei der erfindungsgemäßen Zugangsverwaltungseinrichtung bleiben sowohl der Verschlüsselungsalgorithmus, der Schlüssel selbst und auch die Zusatzinformationen geheim und werden nicht übertragen. Lediglich bei Einrichten der Objekte werden der Verschlüsselungsalgorithmus, der Schlüssel und einige Zusatzinformationen im lokalen Rechner gespeichert. Eine Datenverbindung zur Verwaltungszentrale ist nicht nötig. Da sowohl bei der Verwaltungszentrale als auch bei den Objekten mit demselben Verschlüsselungsalgorithmus und Schlüssel verschlüsselt wird, kann ein Einweg-Verschlüsselungsalgorithmus verwendet werden, der keine reversible Entschlüsselung erlaubt. Da auch die Zusatzinformationen nicht übertragen werden, sondern nur bei der Verschlüsselung verwendet werden, ist auch ein Ausprobieren mit verschiedenen Schlüsseln erschwert, da zusätzlich noch Varianten der Zusatzinformation berücksichtigt werden müssen. Außerdem führt der Verzicht auf die Übermittlung der Zusatzinformation zu einer geringeren Bit-Länge der Zugangsinformationen, was eine schnellere Übertragung vom Zwischenspeichermedium zur Vorrichtung zur Auswertung von Zugangsinformationen ermöglicht.

Die verschlüsselten Zugangsdaten können zentral erzeugt werden, anschließend zwischenübertragen, z. B. an ein Zwischenspeichermedium übergeben werden und danach berührungslos oder manuell zur Auswertung und Steuerung weitergegeben werden, z. B. vom Zwischenspeichermedium ausgehend.

Auf diese Weise kann die Erzeugung und Weitergabe von verschlüsselten Zugangsdaten genau kontrolliert werden, indem die Zugangsdaten nur bei Bedarf erzeugt werden und auch nur an ausgewählte Berechtigte übermittelt und von diesen eingesetzt werden. Wegen fehlender Möglichkeit über öffentliche Kommunikationsmittel an die Zugangsdaten zu gelangen; wird ein missbräuchlicher Zugriff auf verschlüsselte Zugangsdaten erheblich erschwert. Da die Zugangsdaten außerdem zeitlich begrenzt sind, ist es unschädlich, wenn ehemals gültige Zugangsdaten außerhalb des Gültigkeitsbereichs z. B. bei Verlust eines als Zwischenspeichermedium dienenden Mobiltelefons an Unbefugte gelangen.

Beim zentralen Erzeugen der verschlüsselten Zugangsdaten werden zuerst individuelle Zugangsinformationen, die eine veränderliche Zeitangabe enthalten, erzeugt werden und diese individuellen Zugangsinformationen mit Zusatzinformationen verknüpft werden. Anschließend wird die Kombination aus individuellen Zugangsinformationen und Zusatzinformationen gemeinsam mit einem festen Schlüssel einem Verschlüsselungsverfahren unterworfen und als Ergebnis ein Kryptogramm erzeugt. Die individuellen Zugangsinformationen und das Kryptogramm werden schließlich als verschlüsselte Zugangsdaten an das Zwischenspeichermedium übergebenen.

Bei den individuellen Zugangsdaten kann es sich um eine personalisierte Identnummer und Rechte handeln, die die Person ausüben darf. Diese Rechte können abhängig von einer fachlichen oder hierarchischen Qualifikation sein. Die Angaben können in Form einer PIN aus mehreren Ziffern bestehen und als feste Angaben auf einem Zwischenspeichermedium gespeichert sein. Weiterhin können die individuellen Zugangsdaten veränderliche Angaben zur zeitlichen Gültigkeit enthalten. Die Angaben zur zeitlichen Gültigkeit können Beginn und Dauer oder Ende der Zugangsberechtigung sowie eine einmalige oder mehrmalige Zugangsberechtigung umfassen. Weiterhin können auch andere abgestufte Berechtigungen enthalten sein. Diese Angaben können in Form einer TAN ebenfalls aus mehreren Ziffern bestehen und als variable Angaben auf einem mehrfach beschreibbaren Zwischenspeichermedium gespeichert werden oder auch manuell von einem Zwischenspeichermedium weitergegeben werden. Die Kombination aus PIN und TAN ergeben somit die individuellen Zugangsinformationen, die sich aufgrund der enthaltenen Zeitangaben bei ansonsten gleichen Berechtigungen oder Personen stets unterscheiden.

Die Zusatzinformationen enthalten Gruppen- oder Flotten-Angaben, um die Zugangsberechtigungen in weitere Varianten aufzuteilen, die eine Unterscheidung verschiedener Einsatzorte und dortiger Berechtigungen ermöglichen.

Im weiteren Verlauf werden die vorerwähnten individuellen Zugangsinformationen bestehend aus PIN und TAN mit den Zusatzinformationen aus Gruppen- oder Flotten-Angaben einem Verschlüsselungsverfahren mit einem festen Schlüssel unterworfen. Hierbei kann es sich um ein standardisiertes Verschlüsselungsverfahren, z. B. die AES-Verschlüsselung mit einer Blocklänge von 128 Bit und einer Schlüssellänge von ebenfalls 128 Bit handeln, die in zehn Einzelschritten durchgeführt wird. Es sind aber auch Abweichungen vom standardisierten Verschlüsselungsverfahren möglich, wenn geringere Anforderungen an die Sicherheit und eine Beschleunigung des Verschlüsselung- und Entschlüsselungsverfahrens angestrebt wird. Als Ergebnis des Verschlüsselungsverfahrens wird ein Kryptogramm erzeugt, das zusammen mit den individuellen Zugangsinformationen als verschlüsselte Zugangsdaten weitergegeben wird, in dem die verschlüsselten Zugangsdaten z. B. auf einem Zwischenspeichermedium zwischengespeichert werden. Bei dem Zwischenspeichermedium kann es sich im einfachsten Fall um ein solches in Papierform handeln oder auch um ein elektronisches Zwischenspeichermedium in Form eines Transponders, der als Karte oder Schlüsselanhänger ausgebildet sein kann, oder als Mobiltelefon, insbesondere als Smartphone mit Funkschnittstellen nach unterschiedlichen Standards.

Zur Reduzierung der Blocklänge der zu übertragenden Daten auf das Zwischenspeichermedium wird auf die Übernahme der Zusatzinformationen verzichtet. Die Zusatzinformationen sind Teil einer begrenzten Menge und eine Auswahl möglicher und gültiger Zusatzinformationen wird bei einer Auswertung und Steuerung durch eine Auswerte- und Steuervorrichtung berücksichtigt. Weiterhin ist es auch möglich, statt des vollständigen Kryptogramms nur einen Teil zu übernehmen. Dies kann dadurch geschehen, dass aus dem Kryptogramm mit einem weiteren Algorithmus eine Prüfsumme errechnet wird und bei der weiteren Verarbeitung anstelle des Kryptogramms dann die Prüfsumme verwendet wird. Diese Prüfsumme ist vorzugsweise kürzer als das Kryptogramm. Wenn auf diese Weise die Blocklänge der zu übertragenden Daten reduziert wird, kann der Lesevorgang durch das Eingabegerät bei einer langsamen Datenschnittstelle beschleunigt werden und bei einer manuellen Eingabe die Wahrscheinlichkeit einer Fehleingabe durch eine zu lange Zeichenfolge reduziert werden

Zur Auswertung und Steuerung werden aus den erhaltenen verschlüsselten Zugangsdaten die individuellen Zugangsinformationen extrahiert und mit einer Zusatzinformation aus einer begrenzten Menge möglicher Zusatzinformationen verknüpft. Anschließend wird die Kombination aus individuellen Zugangsinformationen und Zusatzinformationen gemeinsam mit demselben festen Schlüssel demselben Verschlüsselungsverfahren unterworfen, dem sie ursprünglich durch die Verschlüsselungszentrale unterworfen wurde. Das aus diesem Verschlüsselungsverfahren ermittelte Kryptogramm wird schließlich mit dem Kryptogramm verglichen, das in den übergebenen verschlüsselten Zugangsdaten enthalten ist. Bei Übereinstimmung der Kryptogramme können die individuellen Zugangsinformationen zur weiteren Steuerung ausgewertet werden. Wenn zusätzlich zu den Kryptogrammen durch den weiteren Algorithmus Prüfsummen errechnet werden, können anstelle der Kryptogramme auch die vorzugsweise kürzeren Prüfsummen eingesetzt werden

Bei der Auswertung und Steuerung wird nicht das vorherige Verschlüsselungsverfahren umgekehrt durchlaufen, sondern es wird das ursprüngliche Verschlüsselungsverfahren, das bereits in der Verschlüsselungszentrale durchgeführt wurde, mit den individuellen Informationen und den Zusatzinformationen erneut durchgeführt. Wenn die individuellen Zugangsinformationen und die Zugangsinformationen übereinstimmen, ergibt sich bei der Verschlüsselung erneut dasselbe Kryptogramm, so dass durch Vergleich mit dem übertragenen vollständigen Kryptogramm oder Teilen davon die Gültigkeit der individuellen Zugangsinformationen bestätigt wird und der Zugang freigegeben werden kann. Wenn anstelle der Kryptogramme Prüfsummen verwendet werden, erfolgt der vorerwähnte Vergleich mit den Prüfsummen.

Da die Zusatzinformationen variieren können, kann es nach einem erstmaligen oder mehrmaligen Durchlaufen des Verschlüsselungsverfahrens zu einer Nichtübereinstimmung der Kryptogramme kommen. In dem Fall können weitere Zusatzinformation aus der begrenzten Menge möglicher Zusatzinformationen mit den individuellen Zugangsinformationen verknüpft werden und das Verschlüsselungsverfahren so lange wiederholt werden bis eine Übereinstimmung der Kryptogramme bzw. Prüfsummen ermittelt wird und die individuellen Zugangsinformationen und die ausgewählten Zusatzinformationen zur weiteren Steuerung ausgewertet werden. Dies kann so lange geschehen, bis ein vollständiger Zyklus mit unterschiedlichen Zusatzinformationen erfolglos durchlaufen ist.

Bei Erfolg hingegen ergeben sich weitere Steuerungsmöglichkeiten in Abhängigkeit der gültigen Zusatzinformationen. Diese zusätzliche Möglichkeit variabler Informationen bei begrenzter Blocklänge der zu übertragenden verschlüsselten Zugangsdaten wäre bei einer Rückgewinnung der unverschlüsselten Angaben durch Entschlüsseln eines Kryptogramms nicht erfolgreich.

Im Übrigen bietet das Verfahren den Vorteil, dass je nach gewünschter Sicherheit weniger als die im Verschlüsselungsstandard erforderlichen Verschlüsselungsschritte durchgeführt werden können oder auch Abweichungen in den Schritten selbst möglich sind. Da bei einer solchen Vorgehensweise der verwendete Algorithmus im Gegensatz zur AES-Verschlüsselung nicht bekannt ist und auch nicht aus dem Kryptogramm entnommen werden kann, ermöglicht eine solche Abwandlung eine zusätzliche Sicherheit gegen Manipulationen.

Das Auswerte- und Steuergerät umfasst einen eigenständigen, nicht mit einer Verschlüsselungszentrale verbunden Rechner mit einem Speicher und einer Uhr. Der Rechner muss nur bei Inbetriebnahme einmalig mit Informationen versorgt werden. Neben allgemeinen Angaben zur Bedeutung und Interpretation der Zugangsdaten handelt es sich zumindest um einen Schlüssel und einen Verschlüsselungsalgorithmus sowie um für den Einsatzort relevante Zusatzinformationen, die im Speicher abgelegt werden. Damit ist die Vorrichtung besonders für Zugangsorte geeignet, die fernab von Infrastruktureinrichtungen liegen und keine Anbindung an leitungsgebundene oder drahtlose Kommunikationsnetze haben oder selten aufgesucht werden, oder bei denen nicht vorab festgelegt werden kann, ob und welche Zugangsbegehren später gewünscht werden. Bei fernab liegenden Zugangsorten kann es sich um Orte im Gebirge, unter der Erde, auf See oder auf mobilen Einrichtungen handeln, bei denen Reparatur- und Wartungsarbeiten auszuführen sind. Zugangsorte, bei denen Zugangsbegehren nicht vorab festzulegen sind, können öffentliche oder private Einrichtungen sein, zu denen bei Notfällen Zugang durch Einsatzkräfte erforderlich ist.

Ein Schutz gegen Manipulationen und eine sichere Auswertung der Zugangsinformationen ist dadurch möglich, dass die dem Auswerte- und Steuergerät übergebenen verschlüsselten Zugangsdaten eine veränderliche Zeitangabe enthalten, die bei Erzeugung eines Kryptogramms mit verschlüsselt wird, und sich somit das Kryptogramm bei ansonsten identischen weiteren individuellen Angaben stets unterscheidet. Manipulationen durch Kopieren und Wiederverwendung derselben Daten sind daher nicht möglich. Eine Rekonstruktion des Schlüssels aus den verschlüsselten Zugangsdaten ist ebenfalls nicht möglich, da der Schlüssel nicht transportiert werden muss, sondern lediglich in einer Verwaltungszentrale und im Rechner gespeichert wird. Je nach Tiefe der Verschlüsselung kann der Rechner eine hardware- und/oder softwaregesteuerte Entschlüsselungsschaltung umfassen, um möglichst schnell die Zugangsinformationen auszuwerten und bei berechtigtem Zugang das Türentriegelungsgerät zu bedienen.

Statt anfangs und dann wiederholt aktuelle und aktualisierte Informationen über individuelle Zugangsdaten für Berechtigte an die Auswerte- und Steuervorrichtung weitergeben zu müssen, werden Zugangsberechtigungen stets neu, zeitabhängig und zeitbeschränkt erteilt und mittels der Uhr des Rechners auf Gültigkeit überwacht. Bei besonders hohen Anforderungen an die Genauigkeit der Uhrzeit kann die Uhr durch ein internes oder öffentliches Zeitnormal, z. B. durch terrestrische oder satellitengestützte Zeitsender synchronisiert werden.

Ohne Zeitnormal müssen die Uhr des Rechners und die Uhr der Verschlüsselungszentrale synchronisiert werden und nach einer einheitlichen Zeitangabe arbeiten. Dies kann in Form einer Zählerangabe erfolgen, die ab einer einheitlichen festgelegten Zeit zu laufen beginnt. Die Schrittweite kann individuell nach der erforderlichen Zeitauflösung gewählt werden und Stunden oder auch Tage betragen. Für eine hohe Sicherheit wird die Zeitauflösung hoch gewählt, für eine geringe Datenmenge hingegen klein.

Die Vorrichtung kann auch hinsichtlich der Energieversorgung als weitgehend autark betrachtet werden, da keine regelmäßige Kommunikationsverbindung unterhalten werden muss und die Geräte lediglich zur Aufrechterhaltung einer Funktionsbereitschaft in einem energiesparenden Modus warten können, bis die Auswertung eines Zugangswunsches angefordert wird.

Das erfindungsgemäße Verfahren bezieht sich auf die Schritte, die vom Rechner der Verwaltungszentrale bei der Verschlüsselung durchgeführt werden, sowie auf die Übertragung der Zugangsinformationen und Prüfinformation auf das Zwischenspeichermedium und die anschließende Übertragung zur Vorrichtung des Objekts und Auswertung durch den dort vorhandenen lokalen Rechner. Hinsichtlich der Erläuterungen wird ergänzend auch auf den Abschnitt zur Zugangsverwaltungseinrichtung verwiesen.

Bei dem erfindungsgemäßen Verfahren enthalten die verschlüsselten Zugangsdaten eine veränderliche Zeitangabe und werden eigenständig und ohne Verbindung zu einer Verschlüsselungszentrale mittels eines gespeicherten Schlüssels und gespeicherten Verschlüsselungsalgorithmus ausgewertet. Außerdem wird die enthaltene veränderliche Zeitangabe mit der aktuellen Uhrzeit verglichen und auf Gültigkeit geprüft. Bei erfolgreicher Prüfung wird der Zugang vom ungeschützten zum geschützten Bereich freigegeben.

Das Verfahren bietet einen Schutz gegen Manipulationen und eine sichere Auswertung der Zugangsinformationen, denn die dem Auswerte- und Steuergerät übergebenen verschlüsselten Zugangsdaten enthalten eine veränderliche Zeitangabe, die bei Erzeugung eines Kryptogramms mit verschlüsselt wird, so dass sich das Kryptogramm bei ansonsten identischen weiteren individuellen Angaben stets unterscheidet. Manipulationen durch Kopieren und Wiederverwendung derselben Daten sind daher nicht möglich. Eine Rekonstruktion des Schlüssels aus den verschlüsselten Zugangsdaten ist ebenfalls nicht möglich, da der Schlüssel nicht transportiert werden muss, sondern lediglich innerhalb geschützter Bereiche gespeichert wird..

Statt anfangs und dann wiederholt aktuelle und aktualisierte Informationen über individuelle Zugangsdaten für Berechtigte an entfernte Orte weitergeben zu müssen, werden Zugangsberechtigungen stets neu, zeitabhängig und zeitbeschränkt erteilt und auf zeitliche Gültigkeit überwacht.

Zur weiteren Steigerung der Sicherheit gegen Manipulationen durch Ausprobieren verschiedener Varianten könnten bei mehrfachen fehlerhaften Eingaben Zeitverzögerungen für weitere Eingaben vorgenommen werden, ehe eine erneute Auswertung durchgeführt werden kann. Dies macht das Ausprobieren verschiedener Varianten praktisch unmöglich.

Gemäß einer Weiterbildung können die verschlüsselten Zugangsdaten berührungslos übergeben werden.

Dies kann z. B. über Funk unter Verwendung eines üblichen Funkstandards für kurze Entfernungen geschehen, wie WLAN, Bluetooth oder nach Feldübertragung (NFC). Eingabefehler lassen sich so weitgehend ausschließen und durch hohe Datenraten kann die Blocklänge zur Erreichung hoher Sicherheitsstandards entsprechend hoch gewählt werden, ohne dass die Reaktionszeit vom Beginn der Eingabe bis zur Auswertung spürbar verlängert wird.

Alternativ können die verschlüsselten Zugangsdaten durch manuelle Eingabe übergeben werden.

In diesem Fall können die verschlüsselten Zugangsdaten aus dem Gedächtnis oder von einem Trägermedium in Papierform übernommen werden. Diese Zugangsmöglichkeit erlaubt den Zugang auch dann noch, z. B. ein mitgeführtes Mobiltelefon wegen Entladung des Akkus nicht funktionsfähig ist.

Daneben ist es möglich, dass die verschlüsselten Zugangsdaten durch eine Kombination aus berührungsloser Übermittlung und manueller Eingabe übergeben werden.

Da in diesem Fall nur ein Teil der Informationen auf einem elektronischen Trägermedium vorliegt und der andere Teil auf einem anderen Medium oder im Gedächtnis eines Benutzers gespeichert ist kann die Sicherheit gegen Manipulationen erhöht werden. Außerdem kann die zeitaufwendigere Eingabe über eine Tastatur verringert werden, wenn nur ein Teil der Informationen manuell eingegeben werden muss.

Als Weiterbildung des Verfahrens können neben einem generellen Zugang von einem ungeschützten Bereich zu einem geschützten Bereich auch noch weitere Freigaben, Einschränkungen oder Berechtigungen gesteuert werden.

Dadurch ist es möglich, ohne großen Mehraufwand im Rahmen desselben Verfahrens abgestuft nach Notwendigkeit und Berechtigung weitere Zugänge direkt oder über die Bereitstellung von Schlüsseln freizugegeben.

Nachfolgend wird die Erfindung anhand eines Ausführungsbeispiels erläutert, das in der Zeichnung dargestellt ist. Darin zeigen:
- Fig. 1: eine schematische Darstellung zur Erzeugung, Übertragung sowie Auswertung und Steuerung von Zugangsinformationen,
- Fig. 2: Datentelegramme zur Erläuterung des Verfahrensablaufs.

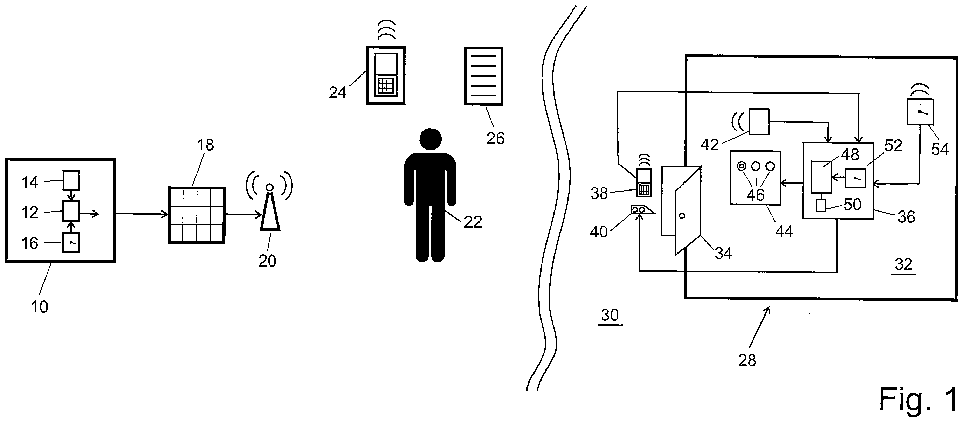

In der schematischen Darstellung nach Fig. 1 muss eine Person 22, die Wartungsarbeiten oder einen Hilfseinsatz bei einem Objekt 28 durchführen soll, Zugang von einem ungeschützten Bereich 30 zu einem geschützten Bereich 32 des Objekts 28 erhalten. Zu diesem Zweck wird eine individuelle Zugangsinformation von einer Verwaltungszentrale 10 erzeugt. Die Zugangsinformation besteht aus einem festen personenbezogenen Teil und einem variablen zeitbezogenen Teil und wird durch einen Rechner 12 anhand eines in einem Speicher 14 gespeicherten Schlüssels und Verschlüsselungsalgorithmus und einer von einer Uhr 16 abgeleiteten Zeit erzeugt. Zusätzlich wird ebenfalls durch einen Verschlüsselungsalgorithmus eine Prüfinformation erzeugt. Die Zugangsinformation und die Prüfinformation werden anschließend über ein Kommunikationsnetz 18 mit einer Mobilfunkschnittstelle 20 zu einem Zwischenspeichermedium 22, 24, 26 übertragen. Bei dem Zwischenspeichermedium kann es sich um ein Smartphone 24 mit mehreren standardisierten Funkschnittstellen handeln. Alternativ kann aber auch ein Medium in Papierform 26 verwendet werden. Schließlich kann die zugangsbegehrende Person 22 auch selbst das Zwischenspeichermedium darstellen, indem sie sich einen übermittelten Code merkt.

Mit der durch das Zwischenspeichermedium gespeicherten Zugangsinformation und der Prüfinformation kann die zugangsbegehrende Person 22 das Objekt 28 aufsuchen, zu der sie Zugang erhalten soll. Die Zugangsinformation und die Prüfinformation des Zwischenspeichermediums werden über ein Eingabegerät 38; 42 der Vorrichtung zur Auswertung von Zugangsinformationen übergeben, die ein Auswerte- und Steuergerät 36 umfasst. Handelt es sich bei dem Eingabegerät um einen Funkempfänger 42 für kurze Entfernungen, kann das Eingabegerät 42 unzugänglich im geschützten Bereich 32 angeordnet sein. Die Übergabe der Zugangsinformationen erfolgt dann vom als Zwischenspeichermedium dienenden Mobiltelefon 24 mittels dessen Funkschnittstelle über eine WLAN oder Bluetooth Verbindung. Alternativ kann das Eingabegerät 38 auch für Nahfeldkommunikation oder Eingabe über eine Tastatur ausgelegt sein. In diesem Fall befindet sich das Eingabegerät 38 im ungeschützten Bereich 30.

Die Eingabe kann dann über einen gemerkten oder von einem Zwischenspeichermedium in Papierform 26 abgelesenen Code manuell erfolgen oder durch Nahfeldkommunikation mittels eines Transponders in Form einer Karte oder eines Schlüsselanhängers oder einer im Mobiltelefon 24 integrierten NFC-Einrichtung. Auch eine kombinierte Eingabe aus berührungslos übertragenen Informationen und über die Tastatur eingegebenen Informationen ist möglich, z. B. die Zugangsinformation berührungslos und die Prüfinformation manuell. Mittels des Auswerte- und Steuergerätes 36 werden die über das Eingabegerät 38; 42 eingegebenen Zugangsinformationen ausgewertet. Bei verschlüsselten Zugangsinformationen werden diese entschlüsselt. Außerdem werden die Zugangsinformationen auf Gültigkeit überprüft, ohne dass dazu eine Verbindung zur Verwaltungszentrale 10 nötig ist. Gründe für einen eigenständigen Betrieb können eine fehlende Kommunikations-Infrastruktur sein, oder auch ein energieautarkes System, das zwecks eines geringen Energieverbrauchs normalerweise in einem energiesparenden Wartezustand verharrt und daher keine Einrichtungen zur Kommunikation über ein Mobilfunknetz unterhält.

Nach Auswertung der Zugangsdaten und einem positiven Ergebnis der Auswertung wird mittels des Auswerte- und Steuergeräts 36 ein Türentriegelungsgerät 40 betätigt und eine Tür 34 entriegelt, so dass die zugangsbegehrende Person 22 eintreten kann. Ergänzend können auch noch weitere Zugangseinrichtungen gesteuert werden, z. B. eine Aufbewahrungseinrichtung 44 mit mehreren Steckplätzen 46 für Schlüssel, um anschließend selektiv weitere Berechtigungen zu erteilen.

Zur Gültigkeitsprüfung umfasst das Auswerte- und Steuergerät 36 einen eigenständigen, nicht mit der Verwaltungszentrale verbundenen Rechner 48 mit einem Speicher 50 und einer Uhr 52. Im Speicher sind allgemeine Angaben über die Bedeutung, Interpretation und Steuerung der Zugangsinformationen und deren Entschlüsselung sowie ein Verschlüsselungsalgorithmus und ein Schlüssel gespeichert, der mit demjenigen Verschlüsselungsalgorithmus und Schlüssel der Verwaltungszentrale übereinstimmt. Der Rechner 48 kann hardware- und/oder softwaregesteuert Verschlüsselungsschritte ausführen. Mit den Zugangsinformationen und intern gespeicherten Varianten von Zusatzinformationen wird mittels des Verschlüsselungsalgorithmus analog zur vorangegangenen Erzeugung der Prüfinformation durch die Verwaltungszentrale eine Variante einer Vergleichsinformation erzeugt und mit der vom Zwischenspeichermedium erhaltenen Prüfinformation verglichen. Bei Nichtübereinstimmung kann der Vorgang mit anderen Varianten wiederholt werden. Nach Auswertung und erfolgreicher Prüfung der Zugangsinformationen auf Gültigkeit und Übereinstimmung der enthaltenen Zeitangaben mit der aktuellen Zeit der Uhr der Vorrichtung erfolgt die Zugangsgewährung. Um auch über einen längeren Zeitraum die Genauigkeit der Uhr sicherzustellen, kann die interne Uhr 52 durch ein Zeitnormal 54 in Form eines terrestrischen oder satellitengestützten Zeitsenders synchronisiert werden.

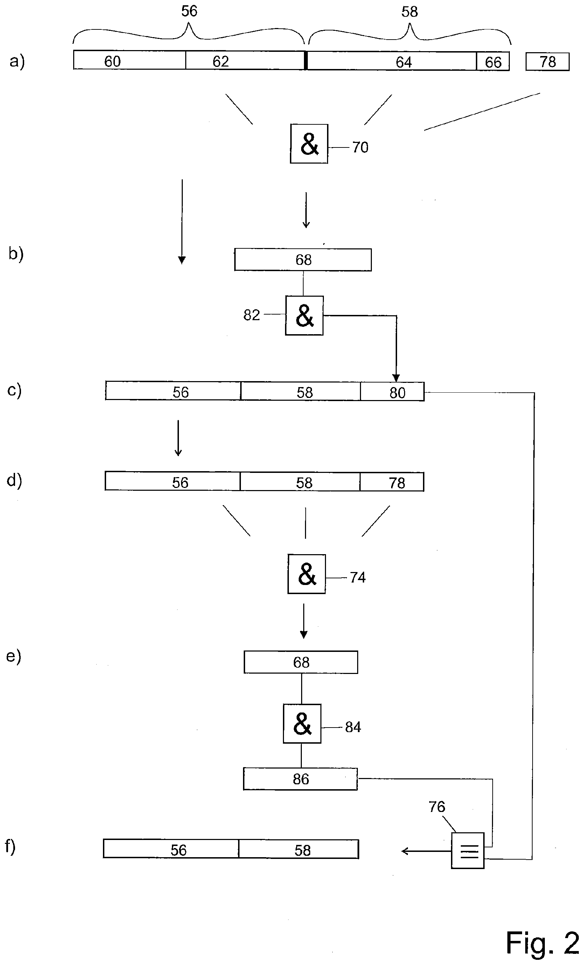

Fig. 2 zeigt Datenstrukturen zur Erläuterung des Verfahrens. In a) umfasst ein Datenwort einen ersten Abschnitt, nämlich eine personalisierte Identnummer 60 und Rechte 62, die die Person ausüben darf. Diese Angaben bestehen in Form einer festen PIN 56 aus mehreren Ziffern. Ein zweiter Abschnitt des Datenworts enthält veränderliche Angaben zur zeitlichen Gültigkeit 64 und zum ein- oder mehrmaligen Zutritt 66. Diese Angaben bestehen in Form einer variablen TAN 58 ebenfalls aus mehreren Ziffern. Das Datenwort aus PIN und TAN enthält in verschlüsselter oder unverschlüsselter Form die Zugangsinformation.

Das Datenwort aus PIN 56 und TAN 58 wird mit Zusatzinformationen verknüpft, die Gruppen- oder Flotten-Angaben 78 enthalten und von denen es mehrere Varianten geben kann. Im Speicher der Verwaltungszentrale sind sämtliche Varianten der Gruppen- oder Flotten-Angaben gespeichert, während in einem Speicher der jeweiligen Einrichtung nur die für diese Einrichtung relevanten Gruppen- oder Flotten-Angaben gespeichert sind und müssen daher im Gegensatz zur PIN und TAN nicht übertragen werden. Die Gruppen- oder Flotten-Angaben 78 bestehen ebenfalls aus mehreren Ziffern.

Das Datenwort aus PIN 56 und TAN 58 wird gemeinsam mit der Zusatzinformation aus einer der möglichen Gruppen- oder Flotten-Angaben 78 anschließend einem Verschlüsselungsverfahren 70 unterzogen. Ein geeignetes Verschlüsselungsverfahren ist das standardisierte AES Verfahren, das mit einer Blocklänge von 128 Bit und einem Schlüssel von ebenfalls 128 Bit oder längeren Schlüsseln arbeitet. Der AES Algorithmus erzeugt ein ebenfalls 128 Bit langes in b) gezeigtes Kryptogramm 68. Aus diesem Kryptogramm 68 wird durch einen weiteren Algorithmus 82 eine Prüfsumme 80 errechnet, die dann zusammen mit der PIN 56 und Tan 58, wie in c) gezeigt, den kompletten Zugangscode aus Zugangsinformation und Prüfinformation darstellt, der mittels des Zwischenspeichermediums an die Nutzer entsprechend verteilt wird. Die Zusatzinformation wird hingegen nicht übergeben. Sie diente im Rahmen des Verschlüsselungsverfahrens aber mit zur Erzeugung des Kryptogramms 68.

Bei der späteren Auswertung im Auswerte- und Steuergerät wird das ursprüngliche Datenwort mit PIN 56 und TAN 58 aus a) und c) übernommen und in d) in einem Durchlauf oder mehreren Durchläufen mit jeweils einer Variante der Gruppen- oder Flotten-Angaben 78 der gespeicherten möglichen Zusatzinformationen einem Verschlüsselungsverfahren 74 unterworfen, das demselben Verschlüsselungsverfahren 70 entspricht, welches auch in der Verschlüsselungszentrale durchgeführt wurde. Als Ergebnis wird erneut ein Kryptogramm 68 in e) erzeugt. Aus diesem Kryptogramm 68 wird mit einem weiteren Algorithmus 84, der dem Algorithmus 82 gleich ist, eine Prüfsumme 86 errechnet, die einer von mehreren Varianten einer Vergleichsinformation entspricht.

Wenn in einem der möglichen Durchläufe dieselbe Zusatzinformation einer Variante der Gruppen- oder Flotten-Angaben 78 eingesetzt wurde, wie bei der Verschlüsselung im Schritt 70, entspricht die errechnete Prüfsumme 86 als Vergleichsinformation der übermittelten Prüfsumme 80 als Prüfinformation, wodurch mittels einer Gültigkeitsprüfung 76 die Gültigkeit der individuellen Zugangsinformationen aus PIN 56 und TAN 58 in f) bestätigt ist. Wurde eine andere Variante der Zusatzinformation eingesetzt, wird die errechnete Vergleichsinformation nicht der übermittelten Prüfinformation entsprechen. Bei fehlender Übereinstimmung werden aus der Menge der möglichen Zusatzinformationen nach und nach weitere Varianten eingesetzt und das Verschlüsselungsverfahren erneut durchlaufen, bis die errechnete Vergleichsinformation der übermittelten Prüfinformation entspricht oder ein vollständiger Zyklus keine Übereinstimmungen ergibt.

Neben der Übereinstimmung der Prüfinformation mit der Vergleichinformation wird zusätzlich noch geprüft, ob die in den Zugangsinformationen enthaltene Zeitangabe mit der aktuellen Zeit deckungsgleich ist, ehe die Gültigkeit zu einer Freigabe einer Tür oder weiterer Einrichtungen führt.

**Bezugszeichenliste**

| | | | |
|---|---|---|---|
| 10 | Verwaltungszentrale | 62 | Rechte |
| 12 | Rechner | 64 | zeitliche Gültigkeit |
| 14 | Speicher | 66 | ein- /mehrmaliger Zutritt |
| 16 | Uhr | 68 | Kryptogramm |
| 18 | Kommunikationsnetz | 70 | Verschlüsselungsverfahren |
| 20 | Mobilfunkschnittstelle | 74 | Verschlüsselungsverfahren |
| 22 | Zwischenspeichermedium, Person | 76 | Gültigkeitsprüfung |
| 24 | Zwischenspeichermedium, Smartphone | 78 | Zusatzinformationen |
| 26 | Zwischenspeichermedium, Papierform | 80 | Prüfsumme, Prüfinformation |
| 28 | Objekt | 82 | Algorithmus |
| 30 | ungeschützter Bereich | 84 | Algorithmus |
| 32 | geschützter Bereich | 86 | Prüfsumme, Vergleichsinformation |
| 34 | Tür | | |
| 36 | Vorrichtung, Auswerte- und Steuergerät | | |
| 38 | Eingabegerät | | |
| 40 | Türentriegelungsgerät | | |
| 42 | Funkempfänger | | |
| 44 | Aufbewahrungseinrichtung | | |
| 46 | Aufbewahrungsplätze | | |
| 48 | Rechner | | |
| 50 | Speicher | | |
| 52 | Uhr | | |
| 54 | Zeitnormal | | |
| 56 | PIN | | |
| 58 | TAN | | |
| 60 | Identnummer | | |

## Patentansprüche

1. Zugangsverwaltungseinrichtung für Objekte, bestehend aus einer Verwaltungszentrale (10), wenigstens einem Zwischenspeichermedium (22, 24, 26) und wenigstens einer Vorrichtung (36) zur Auswertung von Zugangsinformationen und Steuerung einer Zugangstür (34), wobei die Verwaltungszentrale (10) einen Rechner (12) umfasst, mittels dem Zugangsinformationen aus einem festen personenbezogenen Teil und einem variablen zeitbezogenen Teil erzeugt und zum Zwischenspeichermedium (22, 24, 26) übertragen werden, und dass die Vorrichtung (36) zur Auswertung von Zugangsinformationen einen nicht mit der Verwaltungszentrale (10) verbundenen Rechner (48) mit einer Uhr (52) umfasst, mittels dem aus den vom Zwischenspeichermedium (22, 24, 26) gelesenen und mit einer Zeitangabe der Uhr (52) verglichenen Zugangsinformationen eine Entriegelung der Zugangstür gesteuert wird, wobei die Zugangsverwaltungseinrichtung so ausgebildet ist, dass durch den Rechner (12) der Verwaltungszentrale (10) aus den Zugangsinformationen und weiteren nicht übertragenen Zusatzinformationen, welche Gruppen- oder Flotten-Angaben enthalten, um die Zugangsberechtigungen in weitere Varianten aufzuteilen, durch Verschlüsselung mit einem Verschlüsselungsalgorithmus eine Prüfinformation erzeugt wird und ebenfalls zum Zwischenspeichermedium (22, 24, 26) oder einem gesonderten Zwischenspeichermedium übertragen wird und durch den Rechner (48) der Vorrichtung zur Auswertung von Zugangsinformationen aus den vom Zwischenspeichermedium (22, 24, 26) gelesenen Zugangsinformationen und internen gespeicherten Varianten von Zusatzinformationen durch Verschlüsselung mit demselben Verschlüsselungsalgorithmus Varianten von Vergleichsinformationen erzeugt und mit der von Zwischenspeichermedium (22, 24, 26) gelesenen Prüfinformation verglichen werden, und nur bei Übereinstimmung einer der Varianten der Vergleichsinformation mit der Prüfinformation die Entriegelung der Zugangstür (34) freigegeben wird, wobei beim zentralen Erzeugen der Zugangsinformationen zuerst personenbezogene, individuelle Zugangsinformationen (56) und eine veränderliche Zeitangabe (58), erzeugt werden und diese Zugangsinformationen (56, 58) mit Zusatzinformationen (78) verknüpft werden und anschließend die Kombination aus Zugangsinformationen und Zusatzinformationen gemeinsam mit einem festen Schlüssel einem Verschlüsselungsverfahren (70) unterzogen werden und als Ergebnis eine Prüfinformation (80) in Form eines Kryptogramms oder einer zusätzlich durch einen weiteren Algorithmus aus dem Kryptogramm ermittelten Prüfsumme erzeugt wird und dass die dem Zwischenspeichermedium übergebenen Daten aus den Zugangsinformationen (56, 58) und der Prüfinformation (80) bestehen, dass zur Auswertung und Steuerung die erhaltenen Zugangsinformationen (56, 58) mit einer Zusatzinformation (78) aus einer begrenzten Menge möglicher Zusatzinformationen verknüpft werden, dass anschließend die Kombination aus Zugangsinformationen und Zusatzinformation gemeinsam mit demselben festen Schlüssel demselben Verschlüsselungsverfahren (74) unterworfen werden und dass eine aus diesem Verschlüsselungsverfahren ermittelte Vergleichsinformation (86) mit der Prüfinformation (80) und der aktuellen Zeit verglichen wird und bei Übereinstimmung der Vergleichsinformation (86) mit der Prüfinformation (80) und der aktuellen Zeit mit der in der Zugangsinformation enthaltenen Zeit die Zusatzinformationen zur weiteren Steuerung ausgewertet werden, dass bei Nichtübereinstimmung der Vergleichsinformation (86) mit der Prüfinformation (80) das Verschlüsselungsverfahren mit weiteren Varianten der Zusatzinformation (78) aus der begrenzten Menge möglicher Zusatzinformationen so lange wiederholt wird bis eine Übereinstimmung der Vergleichsinformation (86) mit der Prüfinformation (80) erzielt wird und die Zugangsinformationen (56, 58) und die ausgewählten Zusatzinformationen (78) zur weiteren Steuerung ausgewertet werden, oder bis ein vollständiger Zyklus mit unterschiedlichen Zusatzinformationen erfolglos durchlaufen ist.

2. Verfahren zur Zugangsverwaltung von Objekten (28) durch Erzeugen von Zugangsinformationen aus einem festen personenbezogenen Teil (56) und einem variablen zeitbezogenen Teil (58), externes Zwischenspeichern der Zugangsinformationen, Lesen und Auswerten der zwischengespeicherten Zugangsinformationen und Vergleich mit der aktuellen Zeit und Entriegeln einer Zugangstür bei erfolgreichem Vergleich, wobei aus den Zugangsinformationen (56, 58) und weiteren nicht extern zwischengespeicherten Zusatzinformationen (78), welche Gruppen- oder Flotten-Angaben enthalten, um die Zugangsberechtigungen in weitere Varianten aufzuteilen, durch Verschlüsselung (70) mit einem Verschlüsselungsalgorithmus eine Prüfinformation (80) erzeugt wird und ebenfalls extern zwischengespeichert wird und nach Lesen der Zugangsinformationen und internen gespeicherten Varianten von Zusatzinformationen durch Verschlüsselung (74) mit demselben Verschlüsselungsalgorithmus mittels eines Auswerte- und Steuergeräts (36) Varianten von Vergleichsinformationen (86) erzeugt und mit der zwischengespeicherten Prüfinformation (80) verglichen werden, und nur bei Übereinstimmung einer der Varianten der Vergleichsinformation (86) mit der Prüfinformation (80) die Entriegelung der Zugangstür durch das Auswerte- und Steuergerät (36) freigegeben wird, das seinerseits einen eigenständigen, nicht mit einer Verwaltungszentrale (10) verbundenen Rechner (48) mit einer Uhr(52) umfasst, wobei die Zugangsinformationen zentral von der Verwaltungszentrale (10) erzeugt werden, anschließend an ein Zwischenspeichermedium übergeben werden und danach vom Zwischenspeichermedium berührungslos oder manuell zur Auswertung und Steuerung weitergegeben werden, dass beim zentralen Erzeugen der Zugangsinformationen zuerst personenbezogene, individuelle Zugangsinformationen (56) und eine veränderliche Zeitangabe (58), erzeugt werden und diese Zugangsinformationen (56, 58) mit Zusatzinformationen (78) verknüpft werden und anschließend die Kombination aus Zugangsinformationen und Zusatzinformationen gemeinsam mit einem festen Schlüssel einem Verschlüsselungsverfahren (70) unterzogen werden und als Ergebnis eine Prüfinformation (80) in Form eines Kryptogramms oder einer zusätzlich durch einen weiteren Algorithmus aus dem Kryptogramm ermittelten Prüfsumme erzeugt wird und dass die dem Zwischenspeichermedium übergebenen Daten aus den Zugangsinformationen (56, 58) und der Prüfinformation (80) bestehen, dass zur Auswertung und Steuerung die erhaltenen Zugangsinformationen (56, 58) mit einer Zusatzinformation (78) aus einer begrenzten Menge möglicher Zusatzinformationen verknüpft werden, dass anschließend die Kombination aus Zugangsinformationen und Zusatzinformation gemeinsam mit demselben festen Schlüssel demselben Verschlüsselungsverfahren (74) unterworfen werden und dass eine aus diesem Verschlüsselungsverfahren ermittelte Vergleichsinformation (86) mit der Prüfinformation (80) und der aktuellen Zeit verglichen wird und bei Übereinstimmung der Vergleichsinformation (86) mit der Prüfinformation (80) und der aktuellen Zeit mit der in der Zugangsinformation enthaltenen Zeit die Zusatzinformationen zur weiteren Steuerung ausgewertet werden, dass bei Nichtübereinstimmung der Vergleichsinformation (86) mit der Prüfinformation (80) das Verschlüsselungsverfahren mit weiteren Varianten der Zusatzinformation (78) aus der begrenzten Menge möglicher Zusatzinformationen so lange wiederholt wird bis eine Übereinstimmung der Vergleichsinformation (86) mit der Prüfinformation (80) erzielt wird und die Zugangsinformationen (56, 58) und die ausgewählten Zusatzinformationen (78) zur weiteren Steuerung ausgewertet werden, oder bis ein vollständiger Zyklus mit unterschiedlichen Zusatzinformationen erfolglos durchlaufen ist.

3. Verfahren nach Anspruch 2, **dadurch gekennzeichnet, dass** die Zugangsinformationen und die Prüfinformation berührungslos übergeben werden.

4. Verfahren nach Anspruch 2, **dadurch gekennzeichnet, dass** die Zugangsinformationen und die Prüfinformation durch manuelle Eingabe übergeben werden.

5. Verfahren nach Anspruch 2, **dadurch gekennzeichnet, dass** die Zugangsinformationen und die Prüfinformation durch eine Kombination aus berührungsloser Übermittlung und manueller Eingabe übergeben werden.

6. Verfahren nach einem der Ansprüche 2 bis 5, **dadurch gekennzeichnet, dass** die zwischengespeicherten Zugangsinformationen ebenfalls verschlüsselt werden und vor der Auswertung entschlüsselt werden.

7. Verfahren nach einem der Ansprüche 2 bis 6, **dadurch gekennzeichnet, dass** zusätzlich eine Aufbewahrungsvorrichtung und/oder Aufbewahrungsplätze für Wertobjekte freigegeben werden.

## Claims

1. Access management device for objects, consisting of a management centre (10), at least one buffer storage medium (22, 24, 26) and at least one apparatus (36) for evaluating access information and controlling an access door (34), wherein the management centre (10) comprises a computer (12) which generates access information from a fixed person-related part and a variable time-related part and transfers said access information to the buffer storage medium (22, 24, 26), and in that the apparatus (36) for evaluating access information comprises a computer (48) which is not connected to the management centre (10), has a clock (52) and controls unlocking of the access door using the access information that is read from the buffer storage medium (22, 24, 26) and compared with a time specification of the clock (52), wherein the access management device is designed such that the computer (12) of the management centre (10), by encrypting with an encryption algorithm, generates an item of check information from the access information and further additional information, which is not transferred and contains group or fleet details in order to divide the access authorizations into further variants, and also transfers said item of check information to the buffer storage medium (22, 24, 26) or to a separate buffer storage medium, and the computer (48) of the apparatus for evaluating access information generates variants of comparative information from the access information read from the buffer storage medium (22, 24, 26) and internal stored variants of additional information by encrypting with the same encryption algorithm and compares said variants of comparative information with the item of check information read from the buffer storage medium (22, 24, 26), and the access door (34) is unlocked only when one of the variants of the comparative information corresponds with the item of check information, wherein, when the access information is generated centrally, person-related, individual access information (56) and a varying time specification (58) are firstly generated and this access information (56, 58) is combined with additional information (78), and the combination of access information and additional information, together with a fixed key, subsequently undergo an encryption method (70) and as a result an item of check information (80) is generated in the form of a cryptogram or of a checksum additionally ascertained from the cryptogram by a further algorithm, and in that the data delivered to the buffer storage medium consist of the access information (56, 58) and the item of check information (80), in that for the purposes of evaluation and control the received access information (56, 58) is combined with an item of additional information (78) from a limited amount of possible additional information, in that the combination of access information and additional information, together with the same fixed key, subsequently undergo the same encryption method (74) and in that an item of comparative information (86) ascertained from this encryption method is compared with the item of check information (80) and the current time, and the additional information is evaluated for further control when the item of comparative information (86) corresponds with the item of check information (80) and the current time corresponds with the time contained in the access information, in that when the item of comparative information (86) does not correspond with the item of check information (80) the encryption method is repeated with further variants of the additional information (78) from the limited amount of possible additional information until the item of comparative information (86) does correspond with the item of check information (80) and the access information (56, 58) and the selected additional information (78) are evaluated for further control, or until a complete cycle with various additional information has been run through without success.

2. Method for access management of objects (28) by generating access information from a fixed person-related part (56) and a variable time-related part (58), externally buffer-storing the access information, reading and evaluating the buffer-stored access information and comparing it with the current time and unlocking an access door if the comparison is successful, wherein, by encrypting (70) with an encryption algorithm, an item of check information (80) is generated from the access information (56, 58) and further additional information (78), which is not externally buffer-stored and contains group or fleet details in order to divide the access authorizations into further variants, and is likewise externally buffer-stored, and, after reading the access information and internal stored variants of additional information, variants of comparative information (86) are generated by means of an evaluation and control unit (36) by encrypting (74) with the same encryption algorithm and are compared with the item of buffer-stored check information (80), and the access door is unlocked by the evaluation and control unit (36) only when one of the variants of the comparative information (86) corresponds with the item of check information (80), which evaluation and control unit, for its part, comprises an independent computer (48) which is not connected to the a management centre (10) and has a clock (52), wherein the access information is generated centrally by the management centre (10), subsequently delivered to a buffer storage medium and then forwarded from the buffer storage medium contactlessly or manually for the purposes of evaluation and control, in that, when the access information is generated centrally, person-related, individual access information (56) and a varying time specification (58) are firstly generated and this access information (56, 58) is combined with additional information (78) and the combination of access information and additional information, together with a fixed key, subsequently undergo an encryption method (70) and as a result an item of check information (80) is generated in the form of a cryptogram or of a checksum additionally ascertained from the cryptogram by a further algorithm, and in that the data delivered to the buffer storage medium consist of the access information (56, 58) and the item of check information (80), in that for the purposes of evaluation and control the received access information (56, 58) is combined with an item of additional information (78) from a limited amount of possible additional information, in that the combination of access information and additional information, together with the same fixed key, subsequently undergo the same encryption method (74) and in that an item of comparative information (86) ascertained from this encryption method is compared with the item of check information (80) and the from a current time, and the additional information is evaluated for further control when the item of comparative information (86) corresponds with the item of check information (80) and the current time corresponds with the time contained in the access information, in that when the item of comparative information (86) does not correspond with the item of check information (80) the encryption method is repeated with further variants of the additional information (78) from the limited amount of possible additional information until the item of comparative information (86) does correspond with the item of check information (80) and the access information (56, 58) and the selected additional information (78) are evaluated for further control, or until a complete cycle with various additional information has been run through without success.

3. Method according to Claim 2, **characterized in that** the access information and the item of check information are delivered contactlessly.

4. Method according to Claim 2, **characterized in that** the access information and the item of check information are delivered by manual input.

5. Method according to Claim 2, **characterized in that** the access information and the item of check information are delivered by a combination of contactless transmission and manual input.

6. Method according to one of Claims 2 to 5, **characterized in that** the buffer-stored access information is also encrypted and is decrypted before evaluation.

7. Method according to one of Claims 2 to 6, **characterized in that** a storage apparatus and/or storage spaces for valuable objects is/are additionally unlocked.

## Revendications

1. Dispositif de gestion d'accès pour des objets, composé d'un centre de gestion (10), d'au moins un support de stockage intermédiaire (22, 24, 26) et d'au moins un dispositif (36) permettant d'évaluer des informations d'accès et de commander une porte d'accès (34), dans lequel le centre de gestion (10) comprend un ordinateur (12) au moyen duquel des informations d'accès dotées d'une partie personnelle fixe et d'une partie temporelle variable sont générées et transmises au support de stockage intermédiaire (22, 24, 26), et dans lequel le dispositif d'évaluation d'informations d'accès (36) comprend un ordinateur (48) doté d'une horloge (52), non relié au centre de gestion (10), au moyen duquel un déverrouillage de la porte d'accès est commandé selon les informations d'accès lues sur le support de stockage intermédiaire (22, 24, 26) et comparées à une indication horaire de l'horloge (52), dans lequel le dispositif de gestion d'accès est réalisé de telle sorte qu'une information de contrôle est générée par l'ordinateur (12) du centre de gestion (10) à partir des informations d'accès et d'autres informations d'accès non transmises, qui contiennent des indications de groupe ou de flotte pour diviser les autorisations d'accès en d'autres variantes, par cryptage avec un algorithme de cryptage, et ladite information de contrôle est également transmise au support de stockage intermédiaire (22, 24, 26) ou à un support de stockage intermédiaire séparé, et l'ordinateur (48) du dispositif d'évaluation d'informations d'accès génère des variantes d'information comparative à partir des informations d'accès lues sur le support de stockage intermédiaire (22, 24, 26) et de variantes d'informations supplémentaires stockées en interne par cryptage avec le même algorithme de cryptage et les compare avec l'information de contrôle lue sur le support de stockage intermédiaire (22, 24, 26), et le déverrouillage de la porte d'accès (34) n'est autorisée que si l'une des variantes de l'information comparative concorde avec l'information de contrôle, dans lequel, lors de la génération centralisée des informations d'accès, d'abord des informations d'accès individuelles personnelles (56) et une indication horaire variable (58) sont générées, et ces informations d'accès (56, 58) sont associées à des informations supplémentaires (78), et ensuite, la combinaison des informations d'accès et des informations supplémentaires est soumise conjointement avec une clé fixe à un procédé de cryptage (70), et comme résultat, une information de contrôle (80) sous la forme d'un cryptogramme ou d'une somme de contrôle établie en plus par un autre algorithme à partir du cryptogramme est générée, et dans lequel les données transmises au support de stockage intermédiaire sont composées des informations d'accès (56, 58) et de l'information de contrôle (80), dans lequel, pour l'évaluation et la commande, les informations d'accès obtenues (56, 58) sont associées à une information supplémentaire (78) composée d'une quantité limitée d'informations supplémentaires possibles, dans lequel ensuite la combinaison des informations d'accès et des informations supplémentaires est soumise conjointement avec la même clé fixe soumises au même procédé de cryptage (74), et dans lequel une information comparative (86) établie selon ce procédé de cryptage est comparée avec l'information de contrôle (80) et avec l'heure actuelle, et en cas de concordance de l'information comparative (86) avec l'information de contrôle (80) et de l'heure actuelle avec l'heure contenue dans l'information d'accès, les informations supplémentaires sont évaluées pour la suite de la commande, dans lequel, en cas de non concordance de l'information comparative (86) avec l'information de contrôle (80), le procédé de cryptage est répété avec d'autres variantes de l'information supplémentaire (78) parmi la quantité limitée d'informations supplémentaires possibles jusqu'à ce qu'une concordance de l'information comparative (86) avec l'information de contrôle (80) soit obtenue, et les informations d'accès (56, 58) et les informations supplémentaires sélectionnées (78) sont évaluées pour la suite de la commande, ou jusqu'à ce qu'un cycle complet avec différentes informations supplémentaires ait été parcouru sans succès.

2. Procédé de gestion d'accès d'objets (28) par la génération d'informations d'accès dotées d'une partie personnelle fixe (56) et d'une partie temporelle variable (58), le stockage intermédiaire externe des informations d'accès, la lecture et l'évaluation des informations d'accès stockées temporairement, et la comparaison avec l'heure actuelle et le déverrouillage d'une porte d'accès en cas de comparaison réussie, dans lequel une information de contrôle (80) est générée par un cryptage (70) avec un algorithme de cryptage selon les informations d'accès (56, 58) et d'autres informations d'accès (78) non mises en stockage intermédiaire en externe, qui contiennent des indications de groupe ou de flotte pour diviser les autorisations d'accès en d'autres variantes, et est également mise en stockage intermédiaire en externe, et après lecture des informations d'accès et de variantes d'informations d'accès stockées en interne, par un cryptage (74) avec le même algorithme de cryptage, un appareil d'évaluation et de commande (36) génère des variantes d'informations comparatives (86) et les compare avec l'information de contrôle (80) mis en stockage intermédiaire, et uniquement en cas de concordance d'une des variantes de l'information comparative (86) avec l'information de contrôle (80), le déverrouillage de la porte d'accès est autorisée par l'appareil d'évaluation et de commande (36) qui comprend pour sa part un ordinateur (48) autonome, doté d'une horloge (52), non relié à le un centre de gestion (10), dans lequel les informations d'accès sont générées de manière centralisée par le centre de gestion (10), sont transférées ensuite à un support de stockage intermédiaire, et sont ensuite retransmises sans contact ou manuellement du support de stockage intermédiaire pour évaluation et commande, dans lequel, lors de la génération centralisée des informations d'accès, d'abord des informations d'accès individuelles personnelles (56) et une indication horaire variable (58) sont générées, et ces informations d'accès (56, 58) sont associées à des informations supplémentaires (78), et ensuite, la combinaison des informations d'accès et des informations supplémentaires est soumise conjointement avec une clé fixe à un procédé de cryptage (70), et comme résultat, une information de contrôle (80) sous la forme d'un cryptogramme ou d'une somme de contrôle établie en plus par un autre algorithme à partir du cryptogramme est générée, et dans lequel les données transmises au support de stockage intermédiaire sont composées des informations d'accès (56, 58) et de l'information de contrôle (80), dans lequel pour l'évaluation et la commande, les informations d'accès obtenues (56, 58) sont associées à une information supplémentaire (78) composée d'une quantité limitée d'informations supplémentaires possibles, dans lequel ensuite la combinaison des informations d'accès et de l'information supplémentaire est conjointement avec la même clé fixe soumise au même procédé de cryptage (74), et dans lequel une information comparative (86) établie selon ce procédé de cryptage est comparée avec l'information de contrôle (80) et avec l'heure actuelle, et en cas de concordance de l'information comparative (86) avec l'information de contrôle (80) et la d'une heure actuelle avec l'heure contenue dans l'information d'accès, les informations supplémentaires sont évaluées pour la suite de la commande, dans lequel, en cas de non concordance de l'information comparative (86) avec l'information de contrôle (80), le procédé de cryptage est répété avec d'autres variantes de l'information supplémentaire (78) parmi la quantité limitée d'informations supplémentaires possibles jusqu'à ce qu'une concordance de l'information comparative (86) avec l'information de contrôle (80) soit obtenue, et les informations d'accès (56, 58) et les informations supplémentaires sélectionnées (78) sont évaluées pour la suite de la commande, ou jusqu'à ce qu'un cycle complet avec différentes informations supplémentaires ait été parcouru sans succès.

3. Procédé selon la revendication 2, **caractérisé en ce que** les informations d'accès et l'information de contrôle sont transférées sans contact.

4. Procédé selon la revendication 2, **caractérisé en ce que** les informations d'accès et l'information de contrôle sont transférées par saisie manuelle.

5. Procédé selon la revendication 2, **caractérisé en ce que** les informations d'accès et l'information de contrôle sont transférées par une combinaison d'une transmission sans contact et d'une saisie manuelle.

6. Procédé selon l'une quelconque des revendications 2 à 5, **caractérisé en ce que** les informations d'accès mises en stockage intermédiaire sont également cryptées et sont décryptées avant l'évaluation.

7. Procédé selon l'une quelconque des revendications 2 à 6, **caractérisé en ce qu'**en plus, un dispositif de rangement et/ou des emplacements de rangement pour des objets de valeur sont libérés.
